(19) Europäisches Patentamt
European Patent Office
Office européen des brevets

(11) **EP 2 624 171 B1**

## (12) EUROPEAN PATENT SPECIFICATION

(45) Date of publication and mention
of the grant of the patent:
**02.09.2020  Bulletin 2020/36**

(51) Int Cl.:
**G06K 9/00** *(2006.01)*          **A63B 69/18** *(2006.01)*
**A63B 24/00** *(2006.01)*

(21) Application number: **13153032.1**

(22) Date of filing: **29.01.2013**

(54) **Method and node for analysing periodic movements**

Verfahren und Knoten zum Analysieren periodischer Bewegungen

Procédé et n'ud permettant d'analyser des mouvements périodiques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2012  SE 1250065**

(43) Date of publication of application:
**07.08.2013  Bulletin 2013/32**

(73) Proprietor: **WeMeMove AB**
**164 29 Kista (SE)**

(72) Inventors:
• **Norström, Christer**
**644 32 Torshälla (SE)**
• **Holst, Anders**
**183 56 Täby (SE)**

(74) Representative: **Brann AB**
**P.O. Box 3690**
**Drottninggatan 27**
**103 59 Stockholm (SE)**

(56) References cited:
**US-A1- 2011 131 012**

• **STAUFFER Y ET AL: "Multi sensor, accelerometer based nordic skiing analysis: Hardware development, testing and preliminary results", 5TH EUROPEAN CONFERENCE OF THE INTERNATIONAL FEDERATION FOR MEDICAL AND BIOLOGICAL ENGINEERING: 14-18 SEPTEMBER 2011, BUDAPEST, HUNGARY; [IFMBE PROCEEDINGS; ISSN 1680-0737; VOL. 37], SPRINGER VERLAG, DE, vol. 37, no. Pt. 2, 14 October 2011 (2011-10-14), pages 818-821, XP008173002, DOI: 10.1007/978-3-642-23508-5_213 ISBN: 978-3-642-23507-8**
• **MYONG-WOO LEE ET AL: "A single tri-axial accelerometer-based real-time personal life log system capable of activity classification and exercise information generation", 2010 ANNUAL INTERNATIONAL CONFERENCE OF THE IEEE ENGINEERING IN MEDICINE AND BIOLOGY SOCIETY : (EMBC 2010) ; BUENOS AIRES, ARGENTINA, 31 AUGUST - 4 SEPTEMBER 2010, IEEE, PISCATAWAY, NJ, USA, 31 August 2010 (2010-08-31), pages 1390-1393, XP032108697, DOI: 10.1109/IEMBS.2010.5626729 ISBN: 978-1-4244-4123-5**
• **HÅVARD MYKLEBUST ET AL: "Morphological analysis of acceleration signals in cross-country skiing", PROCEEDINGS OF BIOSIGNALS - INTERNATIONAL CONFERENCE ON BIO-INSPIRED SYSTEMS AND SIGNAL PROCESSING (BIOSTEC 2011), 2011, pages 510-517, XP055149922,**
• **GERALD HURST E: "Bayesian Autoregressive Time Series Analysis", IEEE TRANSACTIONS ON SYSTEMS SCIENCE AND CYBERNETICS, IEEE, US, vol. 1, no. 3, September 1968 (1968-09), pages 317-324, XP011163336, ISSN: 0536-1567**

- **HSING-KUO PAO ET AL: "Trajectory Based Behavior Analysis for User Verification", September 2010 (2010-09), INTELLIGENT DATA ENGINEERING AND AUTOMATED LEARNING Â IDEAL 2010, SPRINGER BERLIN HEIDELBERG, BERLIN, HEIDELBERG, PAGE(S) 316 - 323, XP019149658, ISBN: 978-3-642-15380-8 * Sect. 3.2 ***
- **ANDREA MANNINI ET AL: "Machine Learning Methods for Classifying Human Physical Activity from On-Body Accelerometers", SENSORS, vol. 10, no. 2, February 2010 (2010-02), pages 1154-1175, XP055149795, DOI: 10.3390/s100201154**
- **JIN WANG ET AL: "Recognizing Human Daily Activities From Accelerometer Signal", PROCEDIA ENGINEERING, vol. 15, 18 August 2011 (2011-08-18), pages 1780-1786, XP028337653, ISSN: 1877-7058, DOI: 10.1016/J.PROENG.2011.08.331 [retrieved on 2011-12-06]**

## Description

## TECHNICAL FIELD

The disclosure relates to analysis of movements. More particularly, the disclosure relates to a system and a method for analyzing periodic movements of e.g. a cross-country skier.

## BACKGROUND

Many professional athletes, but also joggers or persons performing other physical exercises use pulse watches as a training aid today. The pulse watches may also incorporate positioning systems for collecting more sophisticated information during exercise. However, the pulse watches still provide a limited amount of information, and does not provide any information about how a physical exercise or movement is performed. Different tools based on video analysis are used in many sports for post hoc analysis of movements and physical exercises. Such tools may comprise everything from simple systems based on consumer cameras with graphic annotation interfaces, to considerably more complex and expensive motion-capture systems for more precise three-dimensional modeling of movements. A drawback of such tools is that the feedback is provided only after the exercise, and that it may be difficult to observe small differences between movements performed by the athlete. Furthermore, the tools based on video analysis are difficult to use in a sport such as cross-country skiing, as the athlete is moving over a large area during the exercise, and it may be difficult to capture every movement with a camera.

Another type of tools for analysis of an athlete's movements is based on the use of sensors placed on different parts of the athlete's body, where the sensors typically communicate wirelessly with a computer. The sensors may capture data which may be difficult for a trainer to see with his own eyes. The computer may thus capture data from the sensors on the athlete's body during the exercise, and the captured data may then be used in an analysis tool on the computer to analyze the athlete's performance and movements. The analysis can be used e.g. as a training aid to improve the performance of the athlete. However, a great number of sensors may be needed to get a useful result, and they may interfere with the athlete's movements during the exercise. Furthermore, even if the data capture is performed during the exercise, it may still be complex and time consuming to analyze the large amount of data that is collected and to provide feedback in real-time during the exercise

Other related art in the technical field is disclosed in the document STAUFFER YET AL: "Multi sensor, accelerometer based nordic skiing analysis: Hardware development, testing and preliminary results", 5TH EUROPEAN CONFERENCE OF THE INTERNATIONAL FEDERATION FOR MEDICAL AND BIOLOGICAL ENGINEERING, SPRINGER VERLAG, DE, vol. 37, no. Pt. 2, 14 October 2011 (2011-10-14), pages 818-821, XP008173002, DOI: 10.1007/978-3-642-23508-5_213 ISBN: 978-3-642-23507-8, which discloses a method for analyzing a periodic movement. The document JIN WANG ET AL: "Recognizing Human Daily Activities from Accelerometer Signal", PROCEDIA ENGINEERING, vol. 15, 18 August 2011 (2011-08-18), pages 1780-1786, XP028337653, ISSN: 1877-7058, DOI: 10.1016/ J.PROENG.2011.08.331 discloses a method of classifying movements into movement classes.

## SUMMARY

It is therefore an object to address some of the problems outlined above, and to provide a solution for a detailed analysis of a periodic movement of e.g. an athlete in real-time, without hindering or restricting the athletes movements. This object and others are achieved by the method and the system according to the independent claims, and by the embodiments according to the dependent claims.

In accordance with a first aspect of the invention, a method for analyzing a periodic movement is provided. The method comprises receiving time series data from an inertial sensor used for sensing the periodic movement. The method further comprises partitioning the received time series data into partitions, each partition corresponding to a period of the movement, and transforming each partition into a data representation of a defined size. The method also comprises analyzing the data representation of the periodic movement. Analyzing comprises classifying the periodic movement into a movement class based on a statistical model of at least one movement class. In particular, a probability distribution over the data representation X of a movement period, consisting of k*n elements where k is the number of sensors and n the number of time steps in each period after the transformation, is for each movement class C modeled as $P(X|C) = P(\bar{x}_0|C) \prod_{i=1}^{n} P(\bar{x}_i|\bar{x}_{i-1}, C).$ Here, each $\bar{x}_i$ contains the k sensor values corresponding to the i-th time step, and each factor $P(\bar{x}_i|\bar{x}_{i-1}, C)$ is represented by a 2*k dimensional multivariate Gaussian distribution, and the probability that a data representation X of a movement period belongs to a movement class C is calculated using $P(C|X) \propto P(X|C)P(C)$.

In accordance with a second aspect of the invention, a system for analyzing a periodic movement is provided. The system comprises an inertial sensor for sensing the periodic movement. The system is adapted to receive time series data from the inertial sensor. The system is further adapted to partition the received time series data into partitions, each partition corresponding to a period of the movement, and to transform each partition into a data representation of a defined size. The system is also adapted to analyze the data representation of the periodic movement by classifying the periodic movement into a movement class based on a statistical model of at least one movement class. In particular, a probability distribution over the data representation X of a movement period, consisting of k*n elements where k is the number of sensors and n the number of time steps in each period after the transformation, is for each movement class C modeled as $P(X|C) = P(\bar{x}_0|C) \prod_{i=1}^{n} P(\bar{x}_i|\bar{x}_{i-1}, C).$ Here, each $\bar{x}_i$ contains the k sensor values corresponding to the i-th time step, and each factor $P(\bar{x}_i|\bar{x}_{i-1}, C)$ is represented by a 2*k dimensional multivariate Gaussian distribution, and the probability that a data representation X of a movement period belongs to a movement class C is calculated using $P(C|X) \propto P(X|C)P(C)$.

An advantage of embodiments is that only one sensor is needed for analyzing the periodic movement performed by e.g. an athlete, which minimizes the risk of disturbance of the athlete's movements.

A further advantage is that the analysis may be performed in real-time, such that the result from the analysis may be fed back to the athlete or to a trainer during the exercise.

Other objects, advantages and features of embodiments will be explained in the following detailed description when considered in conjunction with the accompanying drawings and claims.

## BRIEF DESCRIPTION OF THE DRAWINGS

**Figure 1** is a schematic illustration of a system according to one embodiment of the invention.

**Figures 2a-b** are flowcharts illustrating the method according to embodiments.

**Figures 3a-b** are block diagrams schematically illustrating the system according to embodiments.

**Figures 4a-c** are plot diagrams of raw data collected from three different skiers using skating gear 2.

**Figures 5a-c** are plot diagrams of raw data collected from three different skiers using skating gear 3.

## DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the embodiments are primarily described in the form of a method and a system, they may also be embodied in a computer program product as well as in a system comprising a computer processor and a memory coupled to the processor, wherein the memory is encoded with one or more programs that may perform the functions disclosed herein.

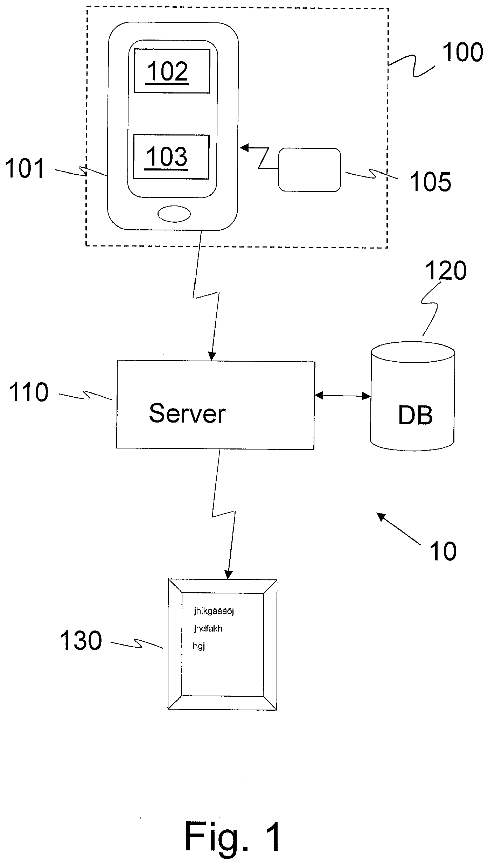

Embodiments are described in a non-limiting general context in relation to an example scenario where the periodic movement is a movement of a person that is cross-country skiing using a ski skating technique, and with a system according to the one illustrated in **Figure 1.** However, it should be noted that the embodiments may also be applied to other types of periodic movements, such as the periodic movement of a trotting horse, of a person jogging, or of a person cross-country skiing using a classic technique. It may also be a periodic movement of a non-living object, such as the pedals of a bicycle, or moving parts of a robot.

The object of analyzing a periodic movement of a cross-country skier in real-time without hindering the skiers movements has been solved by a method wherein an inertial sensor, such as an accelerometer or a gyroscope, is placed on the body of the skier to sense the periodical ski skating movement of the skier. Streaming data from the sensor is then collected and partitioned into the periods of the skier's periodical movement. Each partition is transformed into a data representation of a defined size, in order to represent each partition in a normalized way. The partitioning and the transformation may be referred to as a pre-processing of the time series data from the sensor. The advantage of the pre-processing is that it allows for a data representation in real-time of the periodical movement based on streaming data from an inertial sensor. The data representation may then be used for a subsequent analysis of the periodic movement. The analysis may e.g. comprise a classification of the periodic movement, which may thus give as a result the class of the movement that the skier is performing during a time period. In the example of ski-skating, different limb-movement patterns are used for different terrain and speeds. A skier may thus e.g. be using different skating techniques depending on if she is skiing uphill or downhill. There is no internationally accepted naming convention for these different skating techniques. The following are some examples of the naming of five well defined skating techniques, followed by a brief description of the technique:

1. Gear 1, diagonal V, or single-poling: Similar to the classic herringbone but with a short glide on each ski. This technique is used in very steep uphill.

2. Gear 2, V1, or offset skate: Slightly off-set double-pole on every other leg.

3. Gear 3, V2, or 1-skate: Double-pole on every leg. Used on the flat for accelerating and on moderate uphill.

4. Gear 4, V2 alternate, or 2-Skate: Double-pole on every other leg. Used on the flat, while climbing and on gentle downhill.

5. Gear 5, V skating, or free-skate: Skating without using the poles. Used on downhill at very high speed.

In the following the naming convention gear 1-5 will be used. Each defined skating gear may correspond to a movement class, and the periodic movement of the skier may thus be classified into one of the defined skating gears in the analysis.

**Figure 1** illustrates a system 10 according to one embodiment of the invention. A unit 100 comprising the inertial sensor 105 connected to a mobile terminal 101, is placed on the skier. The unit 100 may e.g. be placed on the chest or on the back of the skier. The mobile terminal 101 comprises a processing circuit 102, and a transmitter 103 for transmitting sensor data to an internet server 110 via a mobile network. The connection between the sensor 105 and the mobile terminal 101 may be a Bluetooth connection, thus making it possible to place the sensor at a distance from the mobile terminal. Furthermore, more than one sensor 105 may be connected to the terminal 101. For example both an accelerometer and a gyroscope may be connected and synchronized with each other. Alternatively two accelerometers placed at different parts of the body may be connected. Today's smart phones have integrated accelerometers and could thus be used as the unit 100 placed on the skier providing a combined sensor 105 and mobile terminal 101. The server 110 may also be connected to a database (DB) 120 used e.g. for storing data collected from the inertial sensor in the form of raw data or pre-processed data, or for storing results from the analysis of the movement.

Time series data received from the sensor 105 may be pre-processed and analyzed locally in the unit 100 carried by the skier, e.g. in the processing circuit 102 of the terminal 101. Time series data may be referred to as a sequence of data received from the sensor 105 over time. An advantage of this embodiment of locally analyzed data is that there is no need for the connection to the internet server 110, so the system is self-contained. Alternatively, the raw time series data received from the sensor 105 may be transmitted to the server 110, and the pre-processing and analysis may be performed in the server 110. In the case when no processing of the data is performed in the unit 100 carried by the skier, the unit 100 will only need to comprise the sensor 105 and the transmitter 103 adapted to forward the raw sensor data to the server 110. An advantage of this embodiment is that the unit 100 carried by the skier is reduced to a minimum. A combination is also possible, wherein the pre-processing of the time series data is performed in the unit 100 carried by the skier, and wherein the pre-processed data is transmitted to the server 110 for further analysis. An advantage of this embodiment is that the amount of data transmitted between the unit 100 on the skier and the server 110 is reduced compared to if raw sensor data is transmitted to the server 110.

Furthermore, a client or user terminal 130 may be connected to the internet server 110 for visualizing the results from the analysis. Also the visualization could be done in real-time. The client may be connected wirelessly, and used e.g. by a ski trainer following the skier's performance on site by visualizing the analysis result in the client user interface. Correspondingly, the unit 100 carried by the skier may also provide a user interface for visualizing the results from the movement analysis in real-time during the exercise. It could also be envisaged to use a sound interface for providing feed-back sounds to the skier based on the analysis. In this way the skier may get feed-back in a more convenient way while skiing.

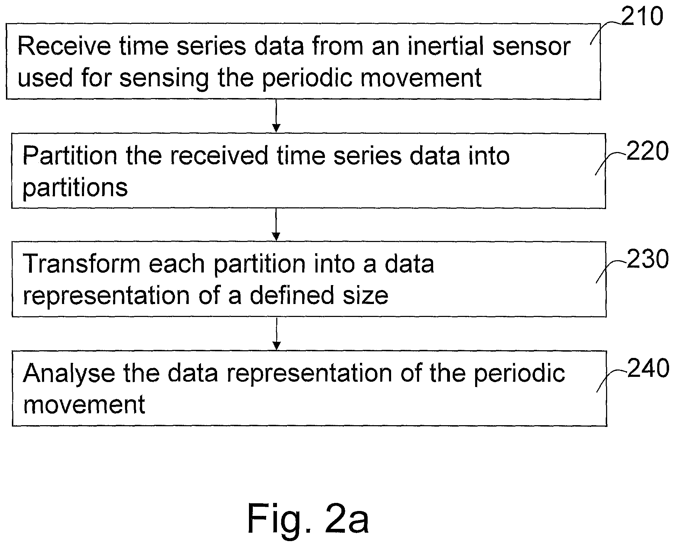

**Figure 2a** is a flowchart illustrating the method for analyzing a periodic movement according to an embodiment of the invention. The periodic movement may e.g. be performed by a human or an animal, typically when performing a sport. In one embodiment, the periodic movement is a movement of a cross-country skiing person. The method comprises:

- 210: Receiving time series data from an inertial sensor used for sensing the periodic movement. The sensor may be an accelerometer or a gyroscope. An accelerometer may provide data from the sensed movement in different directions or axes. A three dimensional accelerometer would e.g. provide data in three perpendicular directions: The lateral movement direction, the vertical movement direction, and the horizontal backward and forward movement direction. The received time series data is thus three dimensional, and may provide support for a rather detailed movement analysis. However, a one dimensional accelerometer may be enough for the purpose of the invention, depending on the type of periodic movement that is to be analyzed. If the movement is primarily in the vertical direction, a one dimensional accelerometer may be enough for a good analysis. The sampling rate of the sensor has to be high enough to allow for a useful analysis. In one example embodiment suitable for the analysis of a ski skating movement, the sampling rate is in the order of one sample every 10 ms.

- 220: Partitioning the received time series data into partitions, each partition corresponding to a period of the movement. The purpose of the partitioning is thus to get a data representation of the sensor data for each period of the movement, such that each movement period may be analyzed. For ski-skating, a period is typically of the length of 0.8-1.6 seconds.

- 230: Transforming each partition into a data representation of a defined size. This step is together with the partitioning of the data into periods also referred to as the pre-processing of the sensor data, crucial for the possibility to do a classification or any other analysis of the data representation. Furthermore, the pre-processing may be performed in real-time based on streaming data.

- 240: Analyzing the data representation of the periodic movement.

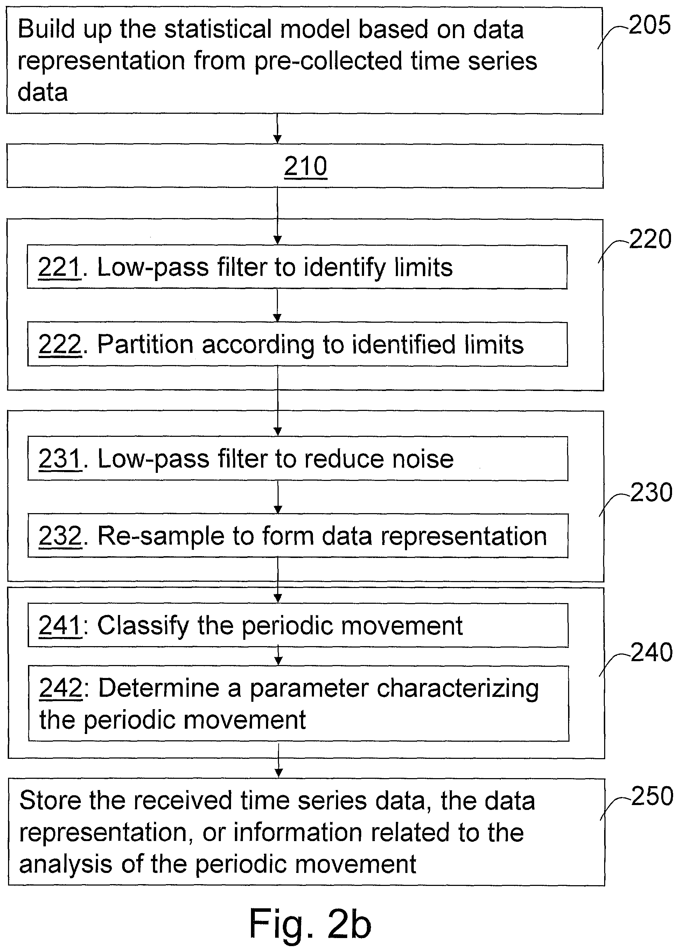

**Figure 2b** is a flowchart illustrating the method for analyzing the periodic movement according to another embodiment of the invention. The method comprises:

- 205: Building up a statistical model based on the data representation derived from pre-collected time series data associated with at least one movement class. The statistical model is used for the classification of the movement. By pre-collecting time series data from skier's when they are performing a certain type of skating technique, the model may be built up in beforehand. In one embodiment, wherein the pre-processing and the analysis is performed in the unit 100 carried by the skier, the model may be downloaded from a server 110 in order to perform the classification. However, another possible embodiment is that the statistical model is built up based on the skier's own movements. It may be enough to build the model on only ten periods from a periodic movement of a certain movement class. The model may then be used in the unit 100 for further analysis of the skier's movements. In this scenario, the step of building up the model may be performed after the step 210 of receiving time series data from the sensor. The pre-processing of the sensor data is thus also useful for the build-up of a powerful statistical model.

- 210: Receiving time series data from an inertial sensor used for sensing the periodic movement. This corresponds to step 210 described above with reference to **Figure 2a.**

- 220: The partitioning of the received time series data into partitions, comprises the following steps:

  - 221: Low-pass filtering the received time series data to identify limits between each period of the movement. By low-pass filtering the data received with a low cut-off frequency, the periods of the movement will stand out clearer from the filtered data. This allows to pin-point when in time one movement period stops and the next one begins based on the data. In alternative example embodiments, the limits between the periods may be identified as the point in time when the filtered data has a peak, or when it passes zero in one direction (upward or downwards). In the example of ski skating, a period is typically of a length of 0.8-1.6 seconds as already mentioned above, and a low enough cut-off frequency for the low-pass filtering may then be 1-2 Hz.

  - 222: Partitioning the data according to the identified limits. As the limits between the periods have been identified in step 221, the received sensor data may be cut up or partitioned into periods accordingly.

- 230: The transforming of each partition comprises the following steps:

  - 231: Low-pass filtering data of each partition to reduce noise. In this way the trajectory of the movement will be accentuated, and only relevant information is kept. Typically a higher cut-off frequency is used than when identifying the periods. In the example of ski skating with periods slower than 1 Hz, a suitable cut-off frequency for the low-pass filtering might be around 5 Hz.

- 232: Re-sampling the low-pass filtered data to form a data representation of a defined size. As a time period of the skier's movement is not constant, due to variations in the skier's performance e.g. because of the steepness of a ski track slope, the data corresponding to a period needs to be re-sampled in order to get a data representation of a defined size. Another reason for the re-sampling is that the sensor's sampling rate may present a variation over time such that the time between samples may be slightly differing.

- 240: The analyzing of the data representation of the periodic movement, comprises the following steps:

  - 241: Classifying the periodic movement into a movement class based on the statistical model of at least one movement class. If only one movement class is modeled, a statistical anomaly detection method can be used to determine whether a movement period belongs to that class. With one movement class for each type of movement, a statistical machine learning method can be used to classify the movement period.

  - 242: Determining a parameter characterizing the periodic movement based on the data representation. The parameter may comprise a level of symmetry of the movement, a variability of the movement, or an amplitude of the movement. For a skating skier, it may be very important to know if she is making the skating movement in an asymmetric way, as that may affect her performance. The level of symmetry may therefore be interesting. A certain amount of variability of the movement is often wanted, as a very static movement may give problems with lactic acid in the muscles. However, the variability should be controlled, and an analysis providing information regarding the variability is therefore advantageous. A simple analysis of the amplitude of a movement may be very interesting in order to find a relation between a movement amplitude and performance. The classification of the movement may be needed before determining a parameter characterizing the movement. A parameter such as the variability of the movement is e.g. coupled to the movement class, while the amplitude and the level of symmetry of the movement may be determined regardless of the movement class. In alternative embodiments, the steps of classifying in 241 and of determining a characterizing parameter in 242 may be performed uncombined. It may e.g. be interesting to perform the analysis of the symmetry level directly in the unit 100 carried by the skier, in order to feed-back that analysis result immediately to the skier. The classification analysis may on the other hand be performed on the server based on pre-processed data transmitted from the unit 100 on the skier, as the classification requires the statistical model(s) which are typically stored on the server 110, or on the database 120 connected to the server.

- 250: Storing at least one of the received time series data, the data representation, or information related to the analysis of the periodic movement. Typically, the storing will be done in a database 120 connected to a server 110. By storing the raw data, any analysis is possible to perform in the future. However, storing only the pre-processed data representation diminishes the requirement on storing capacity. It may also be interesting to store the results from the analysis, such as a level of symmetry in order to track performance changes for a certain skier. Classification results for a certain skier and a certain ski track may also be useful to compare the style of different skiers, or of a same skier over time.

There are several alternative embodiments possible for the transformation 230 of a partition. Alternatives may be to use a Fourier transform method or a Principal Component Analysis (PCA) method. The embodiment described above with reference to steps 231 and 232 has been proved to be suitable for a ski-skating periodic movement.

According to the invention, the statistical model comprises a Markov chain of multivariate Gaussian distributions for each of the at least one movement class. In more detail this means that the probability distribution over the data representation X of a movement period, consisting of k*n elements where k is the number of sensors and n the number of time steps in each period after the transformation, comprising e.g. the filtering and the re-sampling, is for each movement class C modeled as:

$$P(X|C) = P(\bar{x}_0|C) \prod_{i=1}^{n} P(\bar{x}_i|\bar{x}_{i-1}, C) \qquad [1]$$

where each $\bar{x}_i$ contains the k sensor values corresponding to the i:th time step, and each factor $P(\bar{x}_i|\bar{x}_{i-1}, C)$ is represented by a 2*k dimensional multivariate Gaussian distribution. The parameters of the Gaussian distributions are estimated from previously collected sensor data from each movement class.

When the statistical model comprising more than one movement class is used for classification, Bayes theorem may be used to calculate the probability that a data representation X of a movement period belongs to a certain movement class C. The probability is calculated for each movement class C using:

$$P(C|X) \propto P(X|C)P(C) \qquad [2]$$

where P(C) is the prior probability of each class which is typically assumed to be the same for all classes, and $\alpha$ stands for "is proportional to". The movement class with the highest probability is then selected.

When the statistical model comprises only one class, the data representation X of the movement period is said to belong to the class of the model when:

$$P(X|C) > \varepsilon \qquad [3]$$

where $\varepsilon$ is a suitably selected threshold.

An advantage of using a statistical model comprising a Markov chain of multivariate Gaussian distributions is that the model is robust, as the Markov chain allows to break up the very high dimensional input space into a number of smaller dimensional input spaces, and each Gaussian distribution is not as sensitive to noise and deviating values as a more complex non-linear model may be. Furthermore, the build-up of the model, as well as the classification based on the model, is computationally efficient. This means that it is possible to analyze data from a three-dimensional accelerometer without problems with regards to computation performance.

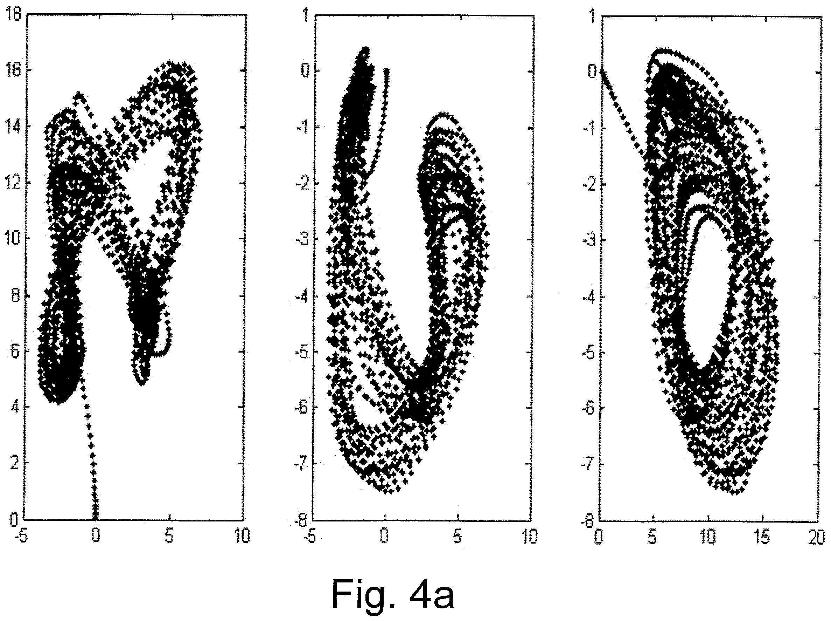

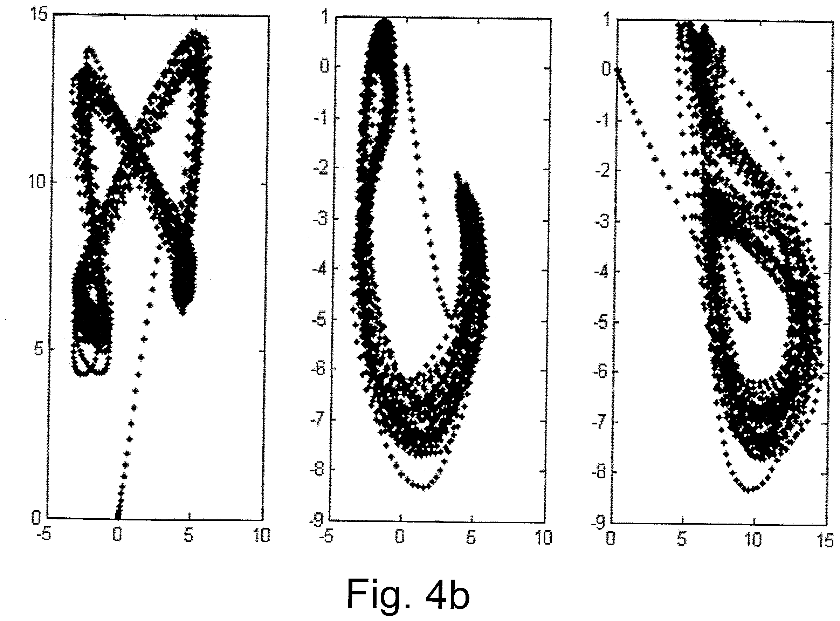

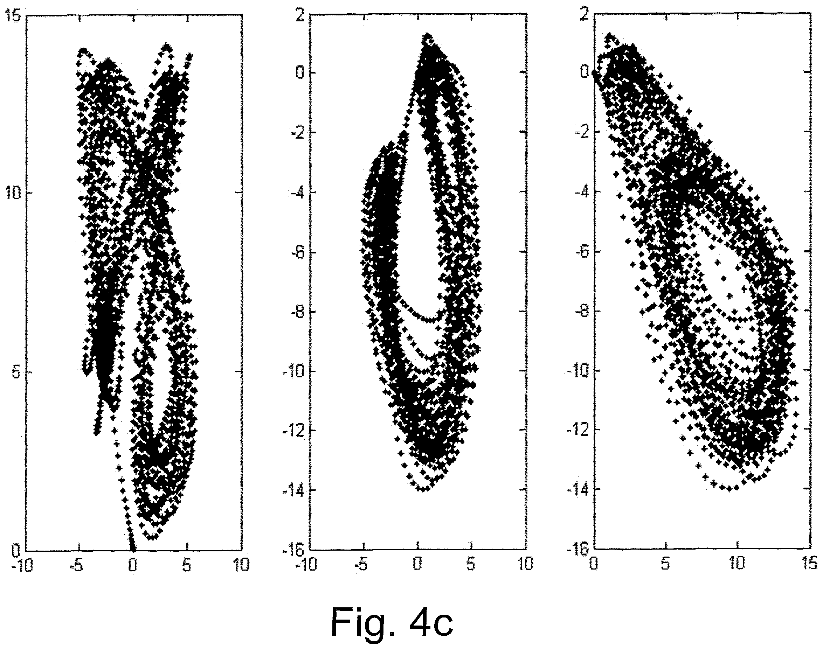

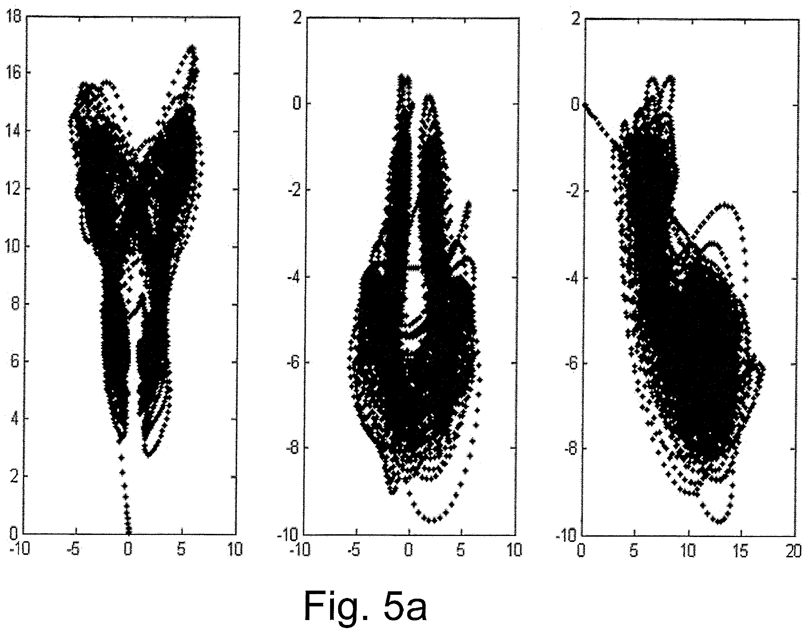

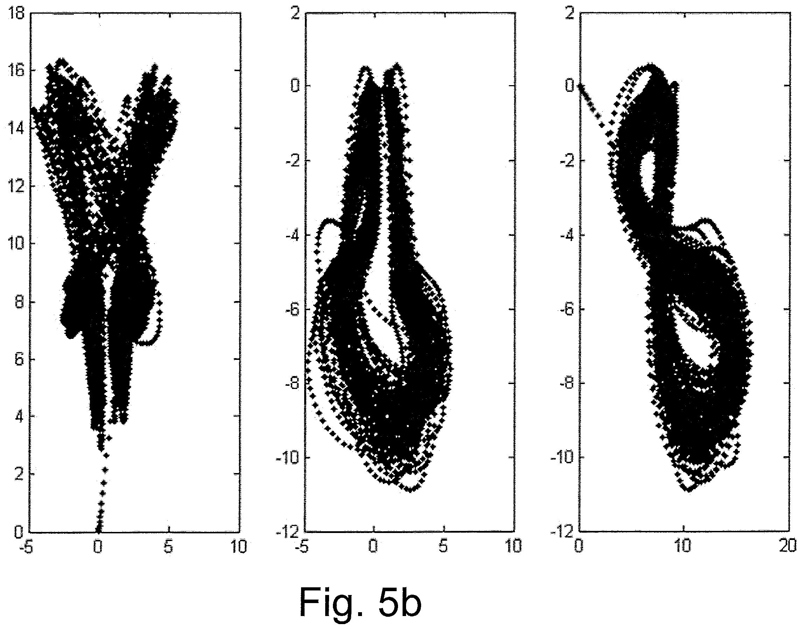

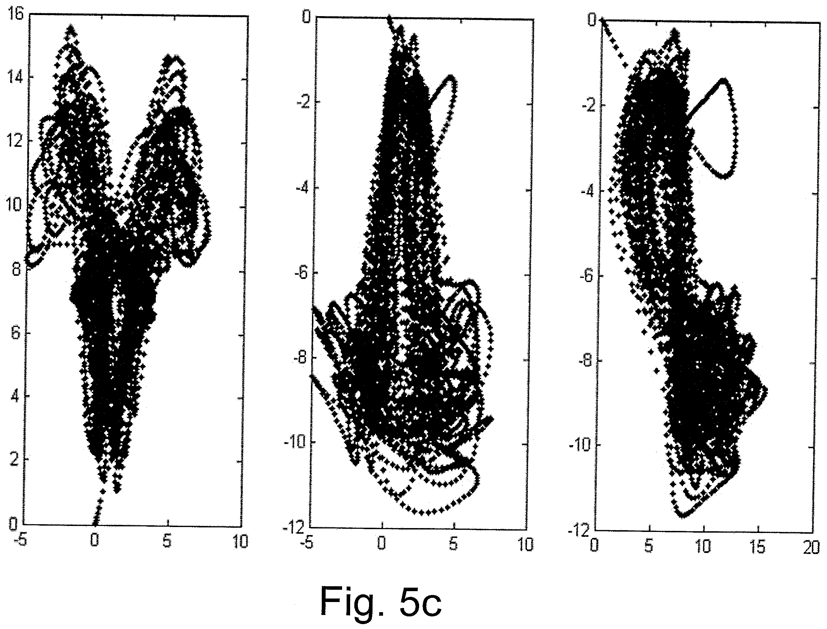

**Figures 4a-c** and **figures 5a-c** illustrate plot diagrams produced from raw data received from a three-dimensional accelerometer fixed on the chest of skiers performing the periodical movement of a defined ski skating gear. **Figures 4a-c** illustrate the plot diagrams for three different skiers (one skier per figure) using skating gear 2, and **figures 5a-c** illustrate the plot diagrams for the three different skiers using skating gear 3. In each figure, the left most plot diagram shows the acceleration of the lateral movement on the x-axis of the diagram, and the acceleration of the vertical movement on the y-axis of the diagram. The middle plot shows the acceleration of the lateral movement on the x-axis, and the acceleration of the horizontal backward and forward movement on the y-axis. The right most plot diagram shows the acceleration of the vertical movement on the x-axis, and the acceleration of the horizontal movement on the y-axis. Said movement directions, i.e. the lateral, the vertical, and the horizontal movement directions are perpendicular to each other.

In any of the previously described embodiments, the method may comprise visualizing a result from analyzing the data representation of the periodic movement in a user interface. Either the skier herself, or the trainer following the skier's performance, may want to visualize the results from the analysis during the exercise. The result from the analysis may e.g. be visualized in a graphical web user interface. External analysis programs such as Excel or Mathlab may also be used to view the results.

In one use case of the present invention, the skier wants to view and store what skating technique she uses at a given time during an exercise. She fastens the unit 100 on her chest with an elastic ribbon, which may e.g. be a smart phone comprising an accelerometer, and an application adapted to receive the sensor data and to perform the pre-processing and movement analysis. The application is started and the skier carries out the skating exercise in the track. When the exercise is finished, the result may be viewed on the smart phones display, e.g. in a graphical view. The result may also be viewed by the skier's trainer by accessing the result via the internet server. More detailed analysis may also be performed on the server, either in real-time, or at a later stage.

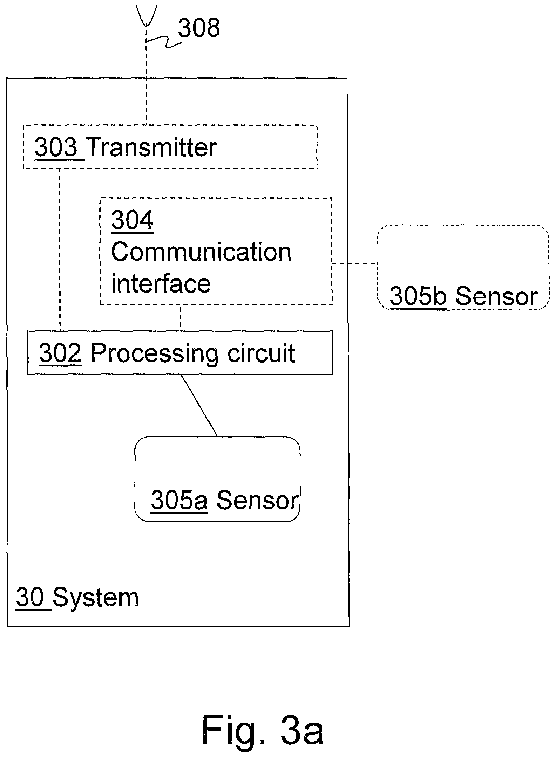

An embodiment of a system 30 for analyzing a periodic movement is schematically illustrated in the block diagram in **Figure 3a.** The system 30 comprises an inertial sensor 305a for sensing the periodic movement. The sensor may be an accelerometer and/or a gyroscope. The system is adapted to receive time series data from the inertial sensor 305a, and to partition the received time series data into partitions, each partition corresponding to a period of the movement. The system 30 is further configured to transform each partition into a data representation of a defined size, and to analyze the data representation of the periodic movement. The system may in this embodiment correspond to the unit 100 in **Figure 1** that the skier is carrying. The system 30 may thus comprise a processing circuit 302 configured to receive the sensor data, perform the pre-processing of the data, and analyze the preprocessed data. The system may optionally comprise a communication interface 304 such as a Bluetooth interface for communicating with an additional sensor node 305b, as well as a transmitter 303 connected to one or more antennas 308 for transmitting sensor data or analysis results to e.g. an external server. The system may in embodiments also comprise a receiver for receiving data from the external server.

In an alternative way to describe the embodiment in **Figure 3a,** the system 30 comprises a Central Processing Unit (CPU) which may be a single unit or a plurality of units. Furthermore, the system comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the system 30 causes the CPU to perform steps of the procedure described earlier in conjunction with **Figure 2a.** In other words, when said code means are run on the CPU, they correspond to the processing circuit 302 of **Figure 3a.**

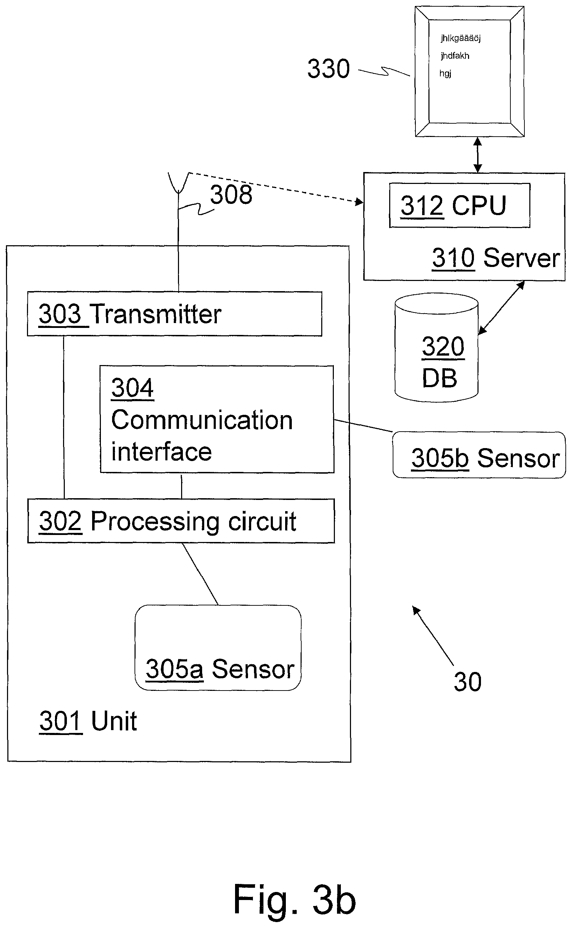

Another embodiment of the system 30 is schematically illustrated in the block diagram in **Figure 3b.** The system may in this embodiment correspond to the whole of system 10 in **Figure 1.** The system 30 comprises an inertial sensor 305a for sensing the periodic movement, comprised in the unit 301 carried by the skier performing the periodic movement. The unit 301 also comprises a communication interface 304 for communicating with an additional sensor node 305b. The system 30 further comprises a server 310, and the unit 301 comprises a transmitter 303 connected to an antenna 308 for transmitting sensor data, data representations, and/or analysis results to the server 310, e.g. via a mobile network. The system may in embodiments also comprise a receiver for receiving data, such as the downloaded statistical model from the external server. A processing unit 302 on the unit 301 is adapted to receive time series data from the inertial sensor 305a and possibly also from an external sensor 305b connected via the communication interface 304. The received sensor data may in one embodiment be transmitted to the server 310. A processing circuit 312 on the server 310 is adapted to partition the received time series data into partitions, to transform each partition into a data representation of a defined size, and to analyze the data representation of the periodic movement. However, as already described previously, in an alternative embodiment, the pre-processing of the sensor data may be performed by the processing circuit 302 in the unit 301, and the pre-processed data may be transmitted to the server 310 for analysis. The system is in embodiments further adapted to store at least one of the received time series data, the data representation, or information related to the analysis of the periodic movement. The system 30 may thus further comprise a database 320 connected to the server 310, adapted to store sensor data or analysis results. The database 320 may in embodiments be integrated with the server 310.

In any of the embodiments described above with reference to **Figures 3a-b,** the system 30, may be adapted to analyze the data representation of the periodic movement by classifying the periodic movement into a movement class based on a statistical model of at least one movement class. The statistical model may comprise a Markov chain of multivariate Gaussian distributions for each of the at least one movement class. The system may be further adapted to build up the statistical model based on the data representation derived from pre-collected time series data associated with the at least one movement class.

In one embodiment, the system is adapted to analyze the data representation of the periodic movement by determining a parameter characterizing the periodic movement based on the data representation. The parameter may comprise a level of symmetry of the movement, a variability of the movement, and/or an amplitude of the movement.

In a further embodiment, the system 30 is further adapted to visualize the result from analyzing the data representation of the periodic movement in a user interface. In the embodiment described in **Figure 3b,** the system 30 may also comprise a client 330 connected to the server, to realize the visualization.

In any of the embodiments described above with reference to **Figures 3a-b,** the system 30, may be adapted to partition the received time series data by low-pass filtering the received time series data to identify limits between each period of the movement, and partitioning the data according to the identified limits. Furthermore, the system may be adapted to transform each partition by low-pass filtering data of each partition to reduce noise, and re-sampling the low-pass filtered data to form a data representation of a defined size. The system may be adapted to perform the partitioning and the transforming in real-time.

The units and circuits described above with reference to **Figures 3a-b** may be logical units, separate physical units or a combination of both logical and physical units.

The above mentioned and described embodiments are only given as examples and should not be limiting. Other solutions, uses, objectives, and functions within the scope of the accompanying patent claims may be possible.

**Claims**

1. A method for analyzing a periodic movement, the method comprising:

   - receiving (210) time series data from an inertial sensor used for sensing the periodic movement,
   - partitioning (220) the received time series data into partitions, each partition corresponding to a period of the movement,
   - transforming (230) each partition into a data representation of a defined size, and
   - analyzing (240) the data representation of the periodic movement, wherein analyzing comprises classifying (241) the periodic movement into a movement class based on a statistical model of at least one movement class, **characterized in that** a probability distribution over the data representation X of a movement period, consisting of k*n elements where k is the number of sensors and n the number of time steps in each period after the transformation, is for each movement class C modeled as

$$P(X|C) = P(\bar{x}_0|C) \prod_{i=1}^{n} P(\bar{x}_i|\bar{x}_{i-1}, C)$$

where each $\bar{x}_i$ contains the k sensor values corresponding to the i-th time step, and each factor $P(\bar{x}_i|\bar{x}_{i-1}, C)$ is represented by a 2*k dimensional multivariate Gaussian distribution, and the probability that a data representation X of a movement period belongs to a movement class C is calculated using

$$P(C|X) \propto P(X|C)P(C).$$

2. The method according to claim 1, further comprising:

- building up (205) the statistical model based on the data representation derived from pre-collected time series data associated with the at least one movement class.

3. The method according to any of the preceding claims, wherein analyzing (240) the data representation of the periodic movement comprises:

- determining (242) a parameter characterizing the periodic movement based on the data representation.

4. The method according to claim 3, wherein the parameter comprises at least one of: a level of symmetry of the movement, a variability of the movement, and an amplitude of the movement.

5. The method according to any of the preceding claims, further comprising visualizing a result from analyzing the data representation of the periodic movement in a user interface.

6. The method according to any of the preceding claims, wherein partitioning (220) the received time series data comprises low-pass filtering (221) the received time series data to identify limits between each period of the movement, and partitioning (222) the data according to the identified limits.

7. The method according to any of the preceding claims, wherein transforming (230) each partition comprises low-pass filtering (231) data of each partition to reduce noise, and re-sampling (232) the low-pass filtered data to form a data representation of a defined size.

8. The method according to any of the preceding claims, wherein the partitioning and the transforming is performed in real-time.

9. The method according to any of the preceding claims, further comprising storing (250) at least one of the received time series data, the data representation, or information related to the analysis of the periodic movement.

10. A system for analyzing a periodic movement, the system comprising an inertial sensor for sensing the periodic movement, wherein the system is adapted to:

- receive time series data from the inertial sensor,
- partition the received time series data into partitions, each partition corresponding to a period of the movement,
- transform each partition into a data representation of a defined size, and
- analyze the data representation of the periodic movement by classifying the periodic movement into a movement class based on a statistical model of at least one movement class,

**characterized in that** a probability distribution over the data representation X of a movement period, consisting of k*n elements where k is the number of sensors and n the number of time steps in each period after the transformation, is for each movement class C modeled as

$$P(X|C) = P(\bar{x}_0|C) \prod_{i=1}^{n} P(\bar{x}_i|\bar{x}_{i-1}, C)$$

where each $\bar{x}_i$ contains the k sensor values corresponding to the i-th time step, and each factor $P(\bar{x}_i|\bar{x}_{i-1},C)$ is represented by a 2*k dimensional multivariate Gaussian distribution, and the probability that a data representation X of a movement period belongs to a movement class C is calculated using

$$P(C|X) \propto P(X|C)P(C).$$

11. The system according to claim 10, wherein the system is further adapted to build up the statistical model based on the data representation derived from pre-collected time series data associated with the at least one movement class.

12. The system according to any of claims 10-11, wherein the system is adapted to analyze the data representation of the periodic movement by determining a parameter characterizing the periodic movement based on the data representation.

13. The system according to any of claims 10-12, wherein the system is adapted to partition the received time series data by low-pass filtering the received time series data to identify limits between each period of the movement, and partitioning the data according to the identified limits.

14. The system according to any of claims 10-13, wherein the system is adapted to transform each partition by low-pass filtering data of each partition to reduce noise, and re-sampling the low-pass filtered data to form a data representation of a defined size.

15. The system according to any of claims 10-14, wherein the system is further adapted to store at least one of the received time series data, the data representation, or information related to the analysis of the periodic movement.

**Patentansprüche**

1. Verfahren zum Analysieren einer periodischen Bewegung, wobei das Verfahren umfasst:

   - Empfangen von (210) Zeitreihendaten von einem Trägheitssensor, der zum Erfassen der periodischen Bewegung verwendet wird,
   - Partitionieren (220) der empfangenen Zeitreihendaten in Partitionen, wobei jede Partition einer Periode der Bewegung entspricht,
   - Transformieren (230) jeder Partition in eine Datendarstellung einer definierten Größe und
   - Analysieren (240) der Datendarstellung der periodischen Bewegung, wobei das Analysieren das Klassifizieren (241) der periodischen Bewegung in eine Bewegungsklasse auf der Grundlage eines statistischen Modells von mindestens einer Bewegungsklasse umfasst,

   **dadurch gekennzeichnet, dass** eine Wahrscheinlichkeitsverteilung über eine Datendarstellung X einer Bewegungsperiode, die aus k*n Elementen besteht, wobei k die Anzahl der Sensoren und n die Anzahl der Zeitschritte in jeder Periode nach der Transformation ist, für jede Bewegungsklasse C als

$$P(X|C) = P(\bar{x}_0|C) \prod_{i=1}^{n} P(\bar{x}_i|\bar{x}_{i-1}, C)$$

   modelliert wird, wobei jedes $\bar{x}_i$ die k Sensorwerte enthält, die dem i-ten Zeitschritt entsprechen, und jeder Faktor $P(\bar{x}_i|\bar{x}_{i-1},C)$ durch eine 2*k-dimensionale multivariate Gaußsche Verteilung dargestellt wird, und die Wahrscheinlichkeit, dass eine Datendarstellung X einer Bewegungsperiode zu einer Bewegungsklasse C gehört, mit Hilfe von

$$P(C|X) \propto P(X|C)P(C)$$

berechnet wird.

2. Verfahren nach Anspruch 1, weiter umfassend:

- Aufbau (205) des statistischen Modells auf der Grundlage der Datendarstellung, die aus vorab erhobenen Zeitreihendaten abgeleitet wurde, die mindestens einer Bewegungsklasse zugeordnet sind.

3. Verfahren nach einem der vorstehenden Ansprüche, wobei das Analysieren (240) der Datendarstellung der periodischen Bewegung Folgendes umfasst:

- Bestimmen (242) eines Parameters, der die periodische Bewegung auf der Grundlage der Datendarstellung kennzeichnet.

4. Verfahren nach Anspruch 3, wobei der Parameter mindestens einen umfasst von: einem Symmetriegrad der Bewegung, einer Variabilität der Bewegung und einer Amplitude der Bewegung.

5. Verfahren nach einem der vorstehenden Ansprüche, weiter umfassend die Visualisierung eines Ergebnisses aus dem Analysieren der Datendarstellung der periodischen Bewegung in einer Benutzeroberfläche.

6. Verfahren nach einem der vorstehenden Ansprüche, wobei das Partitionieren (220) der empfangenen Zeitreihendaten eine Tiefpassfilterung (221) der empfangenen Zeitreihendaten zur Identifizierung von Grenzen zwischen jeder Periode der Bewegung und ein Partitionieren (222) der Daten gemäß den identifizierten Grenzen umfasst.

7. Verfahren nach einem der vorstehenden Ansprüche, wobei das Transformieren (230) jeder Partition eine Tiefpassfilterung (231) von Daten jeder Partition zur Rauschreduzierung und eine erneute Abtastung (232) der tiefpassgefilterten Daten zur Bildung einer Datendarstellung einer definierten Größe umfasst.

8. Verfahren nach einem der vorstehenden Ansprüche, wobei das Partitionieren und das Transformieren in Echtzeit durchgeführt werden.

9. Verfahren nach einem der vorstehenden Ansprüche, weiter umfassend ein Speichern (250) von mindestens einem der empfangenen Zeitreihendaten, der Datendarstellung oder von Informationen, die sich auf die Analyse der periodischen Bewegung beziehen.

10. System zum Analysieren einer periodischen Bewegung, wobei das System einen Trägheitssensor zum Erfassen der periodischen Bewegung umfasst, wobei das System ausgelegt ist, um:

- Zeitreihendaten von dem Trägheitssensor zu empfangen,
- die empfangenen Zeitreihendaten in Partitionen zu partitionieren, wobei jede Partition einer Periode der Bewegung entspricht,
- jede Partition in eine Datendarstellung einer definierten Größe zu transformieren und
- die Datendarstellung der periodischen Bewegung durch Klassifizieren der periodischen Bewegung in eine Bewegungsklasse auf der Grundlage eines statistischen Modells mindestens einer Bewegungsklasse zu analysieren,

**dadurch gekennzeichnet, dass** eine Wahrscheinlichkeitsverteilung über eine Datendarstellung X einer Bewegungsperiode, die aus k*n Elementen besteht, wobei k die Anzahl der Sensoren und n die Anzahl der Zeitschritte in jeder Periode nach der Transformation ist, für jede Bewegungsklasse C als

$$P(X|C) = P(\bar{x}_0|C) \prod_{i=1}^{n} P(\bar{x}_i|\bar{x}_{i-1}, C)$$

modelliert wird, wobei jedes $\bar{x}_i$ die k Sensorwerte enthält, die dem i-ten Zeitschritt entsprechen, und jeder Faktor $P(\bar{x}_i|\bar{x}_{i-1},C)$ durch eine 2*k-dimensionale multivariate Gaußsche Verteilung dargestellt wird, und die Wahrscheinlichkeit, dass eine Datendarstellung X einer Bewegungsperiode zu einer Bewegungsklasse C gehört, mit Hilfe von

$$P(C|X) \propto P(X|C)P(C)$$

berechnet wird.

**11.** System nach Anspruch 10, wobei das System weiter ausgelegt ist, um das statistische Modell auf der Grundlage der Datendarstellung aufzubauen, die von vorab erhobenen Zeitreihendaten abgeleitet ist, die der mindestens einen Bewegungsklasse zugeordnet sind.

**12.** System nach einem der Ansprüche 10-11, wobei das System ausgelegt ist, um die Datendarstellung der periodischen Bewegung zu analysieren, indem es einen Parameter bestimmt, der die periodische Bewegung auf der Grundlage der Datendarstellung kennzeichnet.

**13.** System nach einem der Ansprüche 10-12, wobei das System ausgelegt ist, um die empfangenen Zeitreihendaten durch Tiefpassfilterung der empfangenen Zeitreihendaten zu partitionieren, um Grenzen zwischen jeder Periode der Bewegung zu identifizieren, und die Daten gemäß den identifizierten Grenzen zu partitionieren.

**14.** System nach einem der Ansprüche 10-13, wobei das System ausgelegt ist, um jede Partition durch Tiefpassfilterung der Daten jeder Partition zu transformieren, um Rauschen zu reduzieren, und die tiefpassgefilterten Daten erneut abtastet, um eine Datendarstellung einer definierten Größe zu bilden.

**15.** System nach einem der Ansprüche 10-14, wobei das System weiter ausgelegt ist, um mindestens eines der empfangenen Zeitreihendaten, die Datendarstellung oder Informationen bezüglich der Analyse der periodischen Bewegung zu speichern.

**Revendications**

**1.** Procédé pour analyser un mouvement périodique, le procédé comprenant les étapes consistant à :

- recevoir (210) des données de séries temporelles d'un capteur inertiel utilisé pour détecter le mouvement périodique,
- diviser (220) les données de séries temporelles reçues en partitions, chaque partition correspondant à une période du mouvement,
- transformer (230) chaque partition en une représentation de données d'une taille définie, et
- analyser (240) la représentation de données du mouvement périodique, dans lequel l'étape consistant à analyser comprend l'étape consistant à classifier(241) le mouvement périodique en une classe de mouvement sur la base d'un modèle statistique d'au moins une classe de mouvement,

**caractérisé en ce qu'**une distribution de probabilité sur la représentation de données X d'une période de mouvement, constituée par k*n éléments où k est le nombre de capteurs et n le nombre d'étapes temporelles dans chaque période après la transformation, est, pour chaque classe de mouvement C, modélisée comme

$$P(X|C) = P(\bar{x}_0|C) \prod_{i=1}^{n} P(\bar{x}_i|\bar{x}_{i-1},C)$$

où chaque $\bar{x}_i$ contient les k valeurs de capteur correspondant à la $i^e$ étape temporelle, et chaque facteur $P(\bar{x}_i|\bar{x}_{i-1},C)$ est représenté par une distribution gaussienne multivariée 2*k-dimensionnelle, et la probabilité qu'une représentation de données X d'une période de mouvement appartienne à une classe de mouvement C est calculée en utilisant

$$P(C|X) \propto P(X|C)P(C).$$

2. Procédé selon la revendication 1, comprenant en outre l'étape consistant à :

   - construire (205) le modèle statistique sur la base de la représentation de données dérivée de données de séries temporelles pré-collectées associées à l'au moins une classe de mouvement.

3. Procédé selon l'une quelconque des revendications précédentes, dans lequel l'étape consistant à analyser (240) la représentation de données du mouvement périodique comprend l'étape consistant à :

   - déterminer (242) un paramètre caractérisant le mouvement périodique sur la base de la représentation de données.

4. Procédé selon la revendication 3, dans lequel le paramètre comprend au moins un parmi : un niveau de symétrie du mouvement, une variabilité du mouvement, et une amplitude du mouvement.

5. Procédé selon l'une quelconque des revendications précédentes, comprenant en outre l'étape consistant à visualiser un résultat de l'analyse de la représentation de données du mouvement périodique dans une interface utilisateur.

6. Procédé selon l'une quelconque des revendications précédentes, dans lequel l'étape consistant à diviser (220) les données de séries temporelles reçues comprend les étapes consistant à filtrer passe-bas (221) les données de séries temporelles reçues pour identifier des limites entre chaque période du mouvement, et à diviser (222) les données selon les limites identifiées.

7. Procédé selon l'une quelconque des revendications précédentes, dans lequel l'étape consistant à transformer (230) chaque partition comprend les étapes consistant à filtrer passe-bas (231) des données de chaque partition pour réduire le bruit, et à rééchantillonner (232) les données filtrées passe-bas pour former une représentation de données d'une taille définie.

8. Procédé selon l'une quelconque des revendications précédentes, dans lequel les étapes consistant à diviser et à transformer sont effectuées en temps réel.

9. Procédé selon l'une quelconque des revendications précédentes, comprenant en outre l'étape consistant à stocker (250) au moins une parmi les données de séries temporelles reçues, la représentation de données, ou des informations relatives à l'analyse du mouvement périodique.

10. Système pour analyser un mouvement périodique, le système comprenant un capteur inertiel pour détecter le mouvement périodique, dans lequel le système est adapté pour :

    - recevoir des données de séries temporelles du capteur inertiel,
    - diviser les données de séries temporelles reçues en partitions, chaque partition correspondant à une période du mouvement,
    - transformer chaque partition en une représentation de données d'une taille définie, et
    - analyser la représentation de données du mouvement périodique en classifiant le mouvement périodique en une classe de mouvement sur la base d'un modèle statistique d'au moins une classe de mouvement,

    **caractérisé en ce qu'**une distribution de probabilité sur la représentation de données X d'une période de mouvement, constituée par k*n éléments où k est le nombre de capteurs et n le nombre d'étapes temporelles dans chaque période après la transformation, est, pour chaque classe de mouvement C, modélisée comme

$$P(X|C) = P(\bar{x}_0|C) \prod_{i=1}^{n} P(\bar{x}_i|\bar{x}_{i-1}, C)$$

où chaque $\bar{x}_i$ contient les k valeurs de capteur correspondant à la $i^e$ étape temporelle, et chaque facteur $P(\bar{x}_i|\bar{x}_{i-1}, C)$

est représenté par une distribution gaussienne multivariée 2*k-dimensionnelle, et la probabilité qu'une représentation de données X d'une période de mouvement appartienne à une classe de mouvement C est calculée en utilisant

$$P(C|X) \propto P(X|C)P(C).$$

11. Système selon la revendication 10, dans lequel le système est en outre adapté pour construire le modèle statistique sur la base de la représentation de données dérivée de données de séries temporelles pré-collectées associées à l'au moins une classe de mouvement.

12. Système selon l'une quelconque des revendications 10-11, dans lequel le système est adapté pour analyser la représentation de données du mouvement périodique en déterminant un paramètre caractérisant le mouvement périodique sur la base de la représentation de données.

13. Système selon l'une quelconque des revendications 10-12, dans lequel le système est adapté pour diviser les données de séries temporelles reçues en filtrant passe-bas les données de séries temporelles reçues pour identifier des limites entre chaque période du mouvement, et en divisant les données selon les limites identifiées.

14. Système selon l'une quelconque des revendications 10-13, dans lequel le système est adapté pour transformer chaque partition en filtrant passe-bas des données de chaque partition pour réduire le bruit, et en rééchantillonnant les données filtrées passe-bas pour former une représentation de données d'une taille définie.

15. Système selon l'une quelconque des revendications 10-14, dans lequel le système est en outre adapté pour stocker au moins une parmi les données de séries temporelles reçues, la représentation de données, ou des informations relatives à l'analyse du mouvement périodique.

**Fig. 1**

Receive time series data from an inertial sensor used for sensing the periodic movement ⟋210

Partition the received time series data into partitions ⟋220

Transform each partition into a data representation of a defined size ⟋230

Analyse the data representation of the periodic movement ⟋240

# Fig. 2a

Build up the statistical model based on data representation from pre-collected time series data ⟋205

210

221. Low-pass filter to identify limits

222. Partition according to identified limits

⟋220

231. Low-pass filter to reduce noise

232. Re-sample to form data representation

⟋230

241: Classify the periodic movement

242: Determine a parameter characterizing the periodic movement

⟋240

Store the received time series data, the data representation, or information related to the analysis of the periodic movement ⟋250

# Fig. 2b

Fig. 3a

Fig. 3b

Fig. 4a

Fig. 4b

Fig. 4c

Fig. 5a

Fig. 5b

EP 2 624 171 B1

Fig. 5c

EP 2 624 171 B1

## REFERENCES CITED IN THE DESCRIPTION

**Non-patent literature cited in the description**

- Multi sensor, accelerometer based nordic skiing analysis: Hardware development, testing and preliminary results. **STAUFFER YET.** 5TH EUROPEAN CONFERENCE OF THE INTERNATIONAL FEDERATION FOR MEDICAL AND BIOLOGICAL ENGINEERING. SPRINGER VERLAG, 14 October 2011, vol. 37, 818-821

- **JIN WANG et al.** Recognizing Human Daily Activities from Accelerometer Signal. *PROCEDIA ENGINEERING,* 18 August 2011, vol. 15, ISSN 1877-7058, 1780-1786